# EUROPEAN PATENT SPECIFICATION

(11) **EP 4 180 021 B1**
(45) Date of publication and mention of the grant of the patent: **23.07.2025**
(21) Application number: 22207132.6
(22) Date of filing: 14.11.2022
(51) Int. Cl.: B66C 13/06, A61G 3/00, A61G 1/04, B64D 1/22

(54) **GYROSCOPE ASSISTED HELICOPTER RESCUE LIFT SYSTEMS AND METHODS**
GYROSKOPUNTERSTÜTZTE HUBSCHRAUBERRETTUNGSAUFZUGSSYSTEME UND -VERFAHREN
SYSTÈMES ET PROCÉDÉS DE LEVAGE DE SECOURS D'HÉLICOPTÈRE ASSISTÉS PAR GYROSCOPE

(30) Priority: 12.11.2021 IN 202141051909; 24.05.2022 US 202217752123
(43) Date of publication of application: 17.05.2023
(73) Proprietor: HORNET ACQUISITIONCO, LLC, Vancouver, WA 98685 (US)
(72) Inventor: GOSWAMI, Biplav Bijoy, Guwahati (IN); HIREKERUR, Girish Channakeshavrao, Bengaluru (IN)
(74) Representative: Dehns

(56) References cited:
- JP-B1- 6 867 634
- US-A- 5 871 249
- US-A1- 2019 359 453

## Description

### FIELD

The present disclosure relates to helicopter rescue hoist systems and, more specifically, to a patient litter basket with spin control functions.

### BACKGROUND

The use of helicopters and other aircraft is well known and commonly utilized for rescuing and transporting injured or ill patients who may be located in an area which is difficult to access in the normal course, due to the absence of roads or adequate pathways leading to and from such area. Even where access is available, a helicopter rescue or transport may be needed where the patient needs to be transported to a hospital in less time than it would take for water or land operated forms of transportation, such as in ambulances.

Helicopter rescue of patients is typically accomplished by landing the helicopter nearby the person needing attention. However, there may be many instances where there is no suitable landing site or pad for the helicopter, and the patient must be reached and placed in the helicopter while the helicopter continues to remain airborne, hovering near the pickup site. In such instances, a typical manner for rescue is to lower a patient litter basket from the helicopter by means of a hoist, when the helicopter is more or less directly overhead or nearby the patient. The hoist may comprise a cable which is unreeled, the cable having a hook, swivel or other mechanical structure at its one end by means of which the patient litter basket is attached thereto. There may be a plurality of cables between the hook, swivel or other mechanical structure and the patient litter basket itself, in order to provide more stability to the patient litter basket.

One issue in such rescues relates to the possibility that the patient litter basket may begin to spin uncontrollably, which may be the result of ambient wind and weather conditions (such as fire driven windstorms), or the downdraft of the helicopter rotor itself. While a small amount of spin induced by such conditions may not be a problem, the induced spin may accelerate and increase so that the number of revolutions of the litter basket per minute becomes at least unpleasant for the patient, sometimes inducing sickness, and often dangerous to the patient or the rescue operation.

An example of a device for stabilizing a hoisted object is disclosed in US 2019/0359453 A1.

### SUMMARY

A patient litter basket spin control assembly is provided as defined by claim 1.

A patient litter basket assembly is provided as defined by claim 3.

A method for stabilizing a patient litter basket is provided as defined by claim 7.

In various embodiments, the method further comprises simultaneously activating the first gyroscope and a second gyroscope to counter act the torque of the patient litter basket, wherein the gyroscopic counter torque comprises a sum of a first torque generated by the first gyroscope and a second torque generated by the second gyroscope.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a perspective view of a patient litter basket assembly in accordance with various embodiments of the present disclosure;
FIG. 2A, FIG. 2B, FIG. 2C, and FIG. 2D illustrate a perspective view, a bottom view, a side view, and a front view, respectively, of a patient litter basket assembly including a four gyroscope design in accordance with various embodiments of the present disclosure;
FIG. 3 illustrates a schematic view of a patient litter basket control assembly in accordance with various embodiments of the present disclosure;
FIG. 4A, FIG. 4B, FIG. 4C, and FIG. 4D illustrate a perspective view, a bottom view, a side view, and a front view, respectively, of a patient litter basket assembly including a two gyroscope design in accordance with various embodiments of the present disclosure; and
FIG. 5 illustrates an exemplary gyroscope design in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the inventions, it should be understood that other embodiments may be realized and that changes may be made without departing from the scope of the invention as defined by the claims. Thus, the detailed description herein is presented for purposes of illustration only and not of limitation. For example, the steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

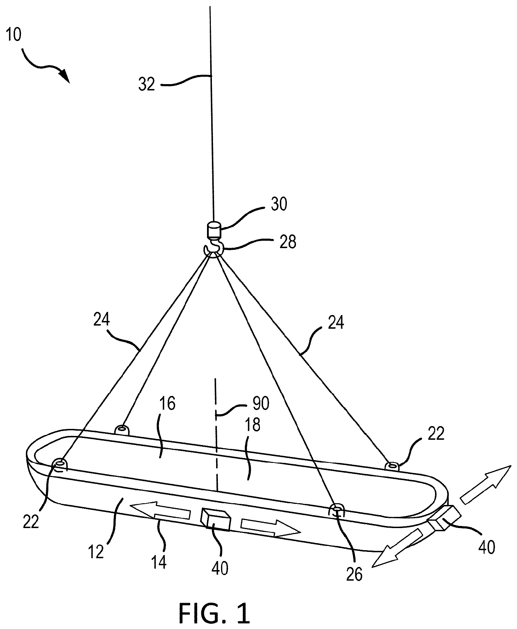

With reference to FIG. 1, a rescue basket assembly 10 (also referred to as a litter basket assembly) is illustrated, in accordance with various embodiments of the present disclosure. The assembly 10 includes a patient litter basket 12, of elongate size and a somewhat narrower width, with a base 14 and sidewalls 16 defining a patient space 18. The patient or person space 18 is of sufficient size to allow such person to be placed in the patient litter basket 12 in a supine position, and there may be appropriate contours, securing straps, mattresses or padding, and other structures to properly secure the person within the patient litter basket 12 in a secure and comfortable position.

The patient litter basket 12 may include a pair of connecting tabs 22 on each of the longitudinal side edges thereof. Other forms of connection besides connecting tabs may be provided on the patient litter basket 12 illustrated, in accordance with various embodiments of the present disclosure. A connector cable 24 may be secured in an aperture 26 of each of the connecting tabs 22, and extends to a hook 28 with a swivel 30. The hook 28 with swivel 30 is attached to a hoist line 32 at one end thereof. At the other end, the hoist line 32 is attached to a hoist drum or spool (not shown) which, in conventional fashion, can be rotated either by hand manually or, more conventionally in larger applications, by a hoist motor where the loads are heavier. The hoist spool is therefore able to raise and lower the hoist line 32 and the attached swivel 30 with hook 28 at the other end. It should be appreciated that each of the connector cables 24 may be attached to hoist line 32 via other known attachment devices other than swivel 30 and/or hook 28 (e.g., via a shackle, etc.) without departing from the scope of the invention as defined by the claims.

In various embodiments, assembly 10 includes one or more gyroscopes 40 to counteract spinning options of the patient litter basket 12. It should be understood that gyroscopes 40 are schematically illustrated in FIG. 1 and that the positioning of gyroscopes 40 with respect to the patient litter basket 12 is not limited as such. In various embodiments, the gyroscopes 40 are mounted to sidewalls 16 to increase the distance between yaw axis 90 and gyroscopes 40, thereby increasing the mass moment of inertia of the gyroscope assembly imparted to patient litter basket 12 about yaw axis 90. In various embodiments, gyroscopes 40 are mounted to sidewalls 16. In various embodiments, gyroscopes 40 are mounted to the outside of sidewalls 16. In various embodiments, gyroscopes 40 are at least partially embedded within sidewalls 16. In various embodiments, gyroscopes 40 are mounted to base 14. In various embodiments, gyroscopes 40 are mounted to the bottom of patient litter basket 12 (e.g., to base 14). Moreover, gyroscopes 40 may be least partially embedded within base 14.

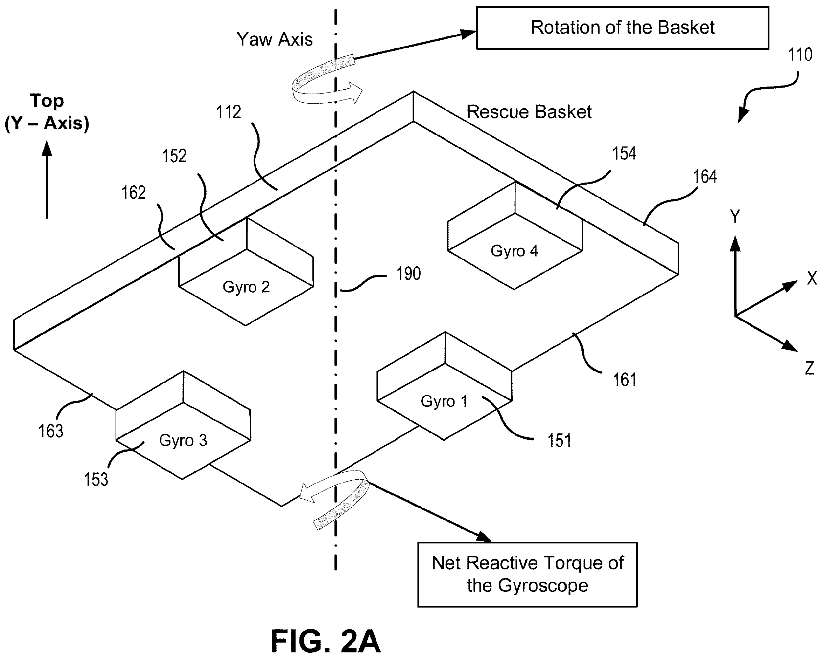

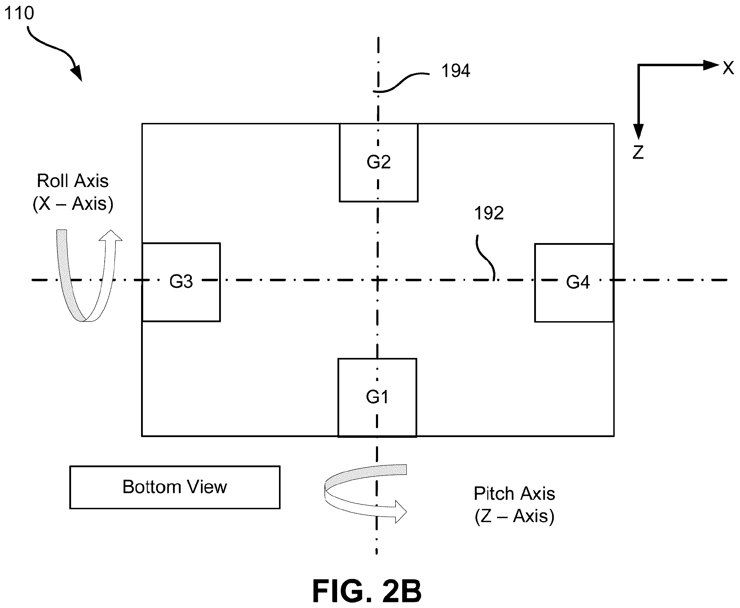

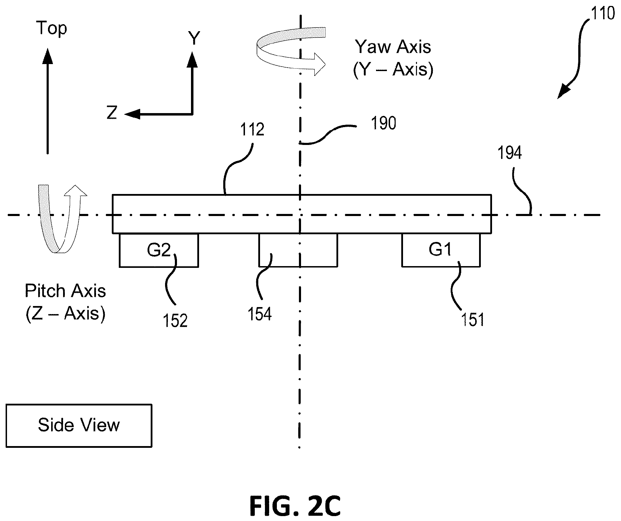

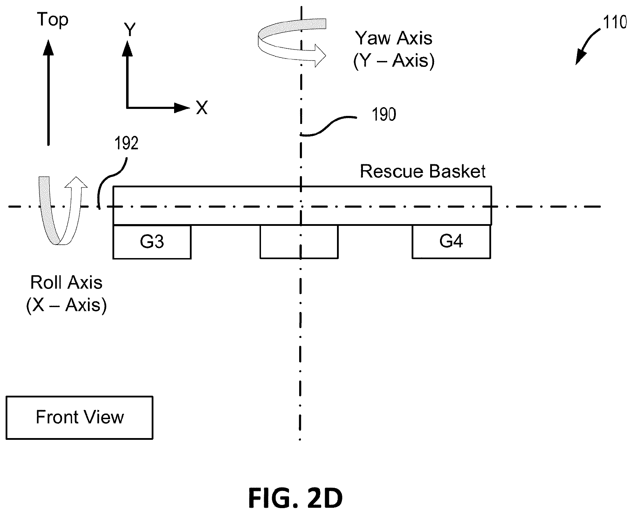

With reference to FIG. 2A through FIG. 2D, various schematic views of a patient litter basket assembly 110 including a patient litter basket 112 with a four gyroscope based configuration are illustrated, in accordance with various embodiments. In various embodiments, patient litter basket 112 may be similar to patient litter basket 12 of FIG. 1.

Patient litter basket 112 may include a first pair of gyroscopes including a first gyroscope 151 and a second gyroscope 152 located at opposite sides of the patient litter basket 112. For example, first gyroscope 151 may be located at first side 161 of patient litter basket 112 and second gyroscope 152 may be located at second side 162 of patient litter basket 112. In various embodiments, first gyroscope 151 and second gyroscope 152 are located substantially midway between the ends (i.e., first end 163 and second end 164) of patient litter basket 112. For example, first gyroscope 151 and second gyroscope 152 may be located between 40% and 60% of the way between first end 163 and second end 164. In various embodiments, first gyroscope 151 and second gyroscope 152 are located half way between first end 163 and second end 164. First gyroscope 151 and second gyroscope 152 may be simultaneously activated to counteract a spinning motion of the patient litter basket 112.

Patient litter basket 112 may include a second pair of gyroscopes including a third gyroscope 153 and a fourth gyroscope 154 located at opposite ends of the patient litter basket 112. For example, third gyroscope 153 may be located at first end 163 of patient litter basket 112 and fourth gyroscope 154 may be located at second end 164 of patient litter basket 112. In various embodiments, third gyroscope 153 and fourth gyroscope 154 are located substantially midway between the sides (i.e., first side 161 and second side 162) of patient litter basket 112. For example, third gyroscope 153 and fourth gyroscope 154 may be located between 40% and 60% of the way between first side 161 and second side 162. In various embodiments, third gyroscope 153 and fourth gyroscope 154 are located half way between first side 161 and second side 162. Third gyroscope 153 and fourth gyroscope 154 may be simultaneously activated to counteract a spinning motion of the patient litter basket 112.

The gyroscope pairs are configured to counteract a spinning motion of the patient litter basket 112. For example, if the patient litter basket 112 starts to spin about the yaw axis 190 in a first rotational direction, the gyroscope pairs (e.g., first gyroscope 151 and second gyroscope 152 and/or third gyroscope 153 and fourth gyroscope 154) may be activated to provide a counter torque in a second rotational direction and prevent spinning. In various embodiments, the counter torque may be incrementally increased or decreased according to the spin rate of the patient litter basket 112.

In various embodiments, the gyroscope pairs are configured to counteract a spinning motion of the patient litter basket 112 about the yaw axis 190. The gyroscope pairs may be further configured to counteract a spinning motion of the patient litter basket 112 about the roll axis 192 and/or the pitch axis 194. It will be appreciated that the torque imparted by each gyroscope will be based upon the orientation of the flywheel associated with the gyroscope. For example, each gyroscope may comprise a single flywheel that can be oriented in various directions, in accordance with various embodiments, or a plurality of flywheels each oriented in a fixed direction and dedicated to counteract rotation in a predetermined rotational direction, in accordance with various embodiments. In various embodiments, each gyroscope comprises a single flywheel oriented in a fixed direction.

In various embodiments, each gyroscope's construction includes a flywheel which is configured to spin and rotate about the axis of precession (e.g., the Z-axis). For example, in response to the flywheel being activated to spin about X-axis and torque is applied to rotate about axis of precession, the flywheel also exerts an equal and opposite torque to the gyroscope frame (which is connected to the patient litter basket 112) due to conservation of angular momentum. Thus, if a single gyroscope is installed to counter act the spinning of patient litter basket 112 about the yaw axis 190, the patient litter basket 112 may tend to experience rotation about X & Z axes, which may compromise the stability of the patient litter basket 112. For this reason, patient litter basket assembly 110 may include two gyroscope pairs to provide the desired counter torque for a spinning basket, without compromising the stability of the basket and ensuring heightened safety.

The logic shown in the below table demonstrates the different axes of rotation of the gyroscopes. As seen, the net reaction torque on the patient litter basket 112 by the gyroscopes is zero. This ensures stability in the roll and pitch axes. Thus, all gyroscopes may work in tandem to produce net torque to counter the spin of the patient litter basket 112. The control system may apply corrective forces, being consistent with the below logic to ensure stability at every instant of a rescue operation.

**Table 1. Gyroscope control logic for yaw axis stabilization**

| **Gyroscope** | **Flywheel Rotation Axis, ω** | **Axis of Precession, ωₚ** | **Gyroscopic Torque Axis** | **Reaction Torque on Basket** |
|---|---|---|---|---|
| Gyroscope 1 | +X | +Z | -Y | -Z |
| Gyroscope 2 | -X | -Z | -Y | +Z |
| Gyroscope 3 | +X | +Z | -Y | -Z |
| Gyroscope 4 | -X | -Z | -Y | +Z |
| Net Torque/Moment | 0 | 0 | -4Y | 0 |

Providing four gyroscopes may ensure robust control of the patient litter basket 112 at all times. Moreover, more complex stability algorithms can be employed. Unexpected loading scenarios such as gust loading, vortex ring state effects while flying in ridges and valleys, and flying through down draught on a side of a mountain, which may each lead to instabilities, can be handled more effectively. A four gyroscope configuration may tend to be more suitable for high risk applications.

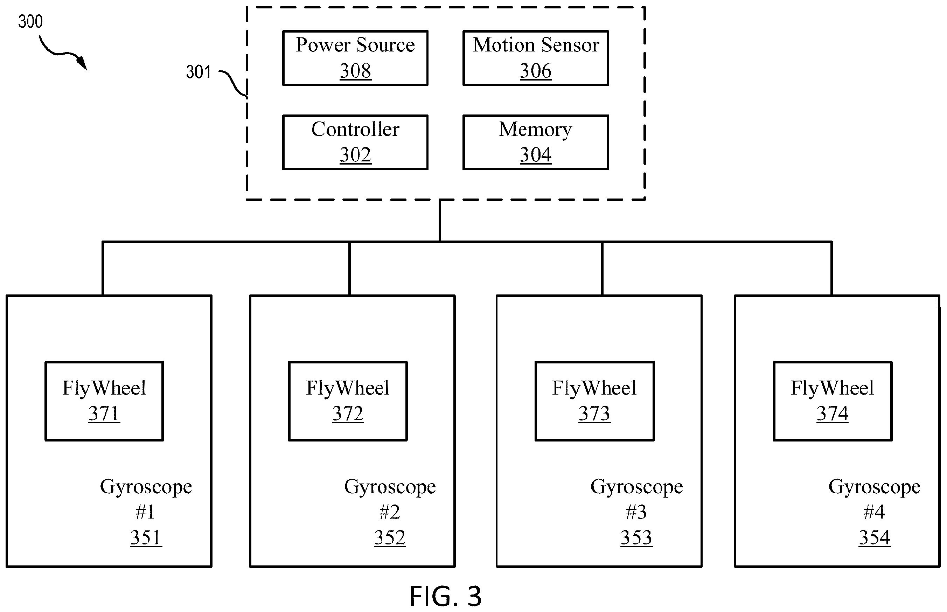

With reference to FIG. 3, a schematic view of a gyroscope assisted control system 300 for controlling the gyroscopes and performing stabilization functions for a patient litter basket during rescue operations, is illustrated, in accordance with various embodiments. In various embodiments, the control system 300 comprises a main control system 301 and a plurality of gyroscopes (e.g., first gyroscope 351, second gyroscope 352, third gyroscope 353, fourth gyroscope 354). Although illustrated as including four gyroscopes, the number of gyroscopes of a control system 300 is not limited in this regard. For example, control system 300 may comprise only two gyroscopes, or may comprise other quantities of gyroscopes. Moreover, although illustrated as comprising a main control system 301, it is contemplated herein that each gyroscope may have its own dedicated control system. For example, each gyroscope may include its own controller, memory, power source, motion sensor, and any combination thereof.

In various embodiments, the main control system 301 includes a controller 302 and a memory 304 (e.g., a database or any appropriate data structure; hereafter "memory 304" also may be referred to as "database 304"). The controller 302 may include one or more logic devices such as one or more of a central processing unit (CPU), an accelerated processing unit (APU), a digital signal processor (DSP), a field programmable gate array (FPGA), an application specific integrated circuit (ASIC), or the like (e.g., controller 302 may utilize one or more processors of any appropriate type/configuration, may utilize any appropriate processing architecture, or both). In various embodiments, the controller 302 may further include any non-transitory memory known in the art. The memory 304 may store instructions usable by the logic device to perform operations. Any appropriate computer-readable type/configuration may be utilized as the memory 304, any appropriate data storage architecture may be utilized by the memory 304, or both. In various embodiments, controller 302 may comprise a PID controller for stabilizing the litter basket.

The database 304 may be integral to the control system 301 or may be located remote from the control system 301. The controller 302 may communicate with the database 304 via any wired or wireless protocol. In that regard, the controller 302 may access data stored in the database 304. In various embodiments, the controller 302 may be integrated into computer systems onboard an aircraft. Furthermore, any number of conventional techniques for electronics configuration, signal processing and/or control, data processing and the like may be employed. Also, the processes, functions, and instructions may include software routines in conjunction with processors, etc.

System program instructions and/or controller instructions may be loaded onto a non-transitory, tangible computer-readable medium having instructions stored thereon that, in response to execution by the processor, cause the controller 302 to perform various operations. The term "non-transitory" is to be understood to remove only propagating transitory signals per se from the claim scope and does not relinquish rights to all standard computer-readable media that are not only propagating transitory signals per se.

The instructions stored on the memory 304 of the controller 302 may be configured to perform various operations, such as performing patient litter basket stabilization by operating one or more of gyroscopes 351, 352, 353, 354.

In various embodiments, the main control system 301 from FIG. 3 further comprises a motion sensor 306. Motion sensor 306 may be mounted to a patient litter basket (e.g., patient litter basket 12 of FIG. 1) to detect an orientation of the patient litter basket. Motion sensor 306 may be an accelerometer, or any other suitable motion sensor suitable for detecting an orientation and/or acceleration of patient litter basket 12.

In various embodiments, the main control system 301 from FIG. 3 further comprises a power source 308. The power source 308 may comprise any power source known in the art, such as a battery, a solar source, an alternating current (AC) source, a direct current (DC) source, a rechargeable source, or the like. In various embodiments, a single power source 308 is provided for all gyroscopes. In various embodiments, each gyroscope 351, 352, 353, 354 includes a dedicated power source 308. In various embodiments, each gyroscope pair (e.g., gyroscopes 351, 352 and gyroscopes 353, 354) includes a dedicated power source 308.

In various embodiments, the main control system 301 is in operable communication with each gyroscope in the plurality of gyroscopes (e.g., gyroscopes 351, 352, 353, 354). With momentary reference to FIG. 3A, during operation of control system 300, motion sensor 306 may detect an angular acceleration of patient litter basket 112 about yaw axis 190. In response to motion sensor 306 detecting an angular acceleration beyond a predetermined threshold angular acceleration, controller 302 may activate the gyroscopes (e.g., gyroscopes 351, 352, 353, 354) to counter act the torque of patient litter basket 112 by applying appropriate gyroscopic torque. For example, if patient litter basket 112 is rotating about yaw axis 190 in a first rotational direction, controller 302 may activate the gyroscopes (e.g., gyroscopes 351, 352, 353, 354) to counter act the torque of patient litter basket 112 by applying gyroscopic torque in a second rotational direction opposite the first rotational direction to slow the rotation of the patient litter basket 112 in the first rotational direction. In various embodiments, the controller 302 may modulate the counter torque of the gyroscopes so that the counter torque counters the rotational movement of the patient litter basket 112 to stabilize the patient litter basket 112 by preventing the spin.

In various embodiments, each gyroscope 351, 352, 353, 354 includes a flywheel 371, 372, 373, 374, respectively, which can be activated by rotating the flywheel about an axis to apply gyroscopic torque in a desired direction. Main control system 301 may activate the gyroscopes and stabilize the patient litter basket 112 upon reaching the threshold angular acceleration, for example as per the logic referred in table 1. In various embodiments, each gyroscope is capable of producing torque in the range of 35 to 100 N-m. In various embodiments, each gyroscope is capable of producing torque sufficient to slow an angular acceleration of the patient litter basket 112 and the particular torque value may vary based on the positioning of the gyroscope with respect to the rotational axis and the overall mass of the patient litter basket 112.

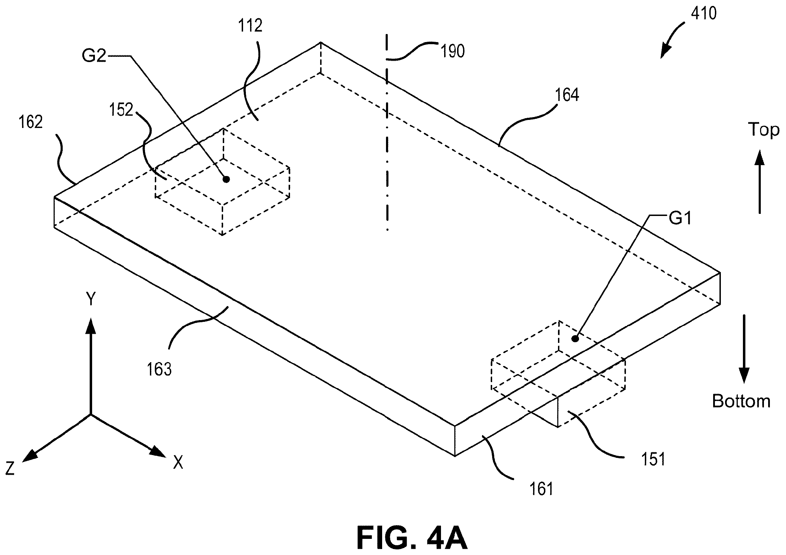

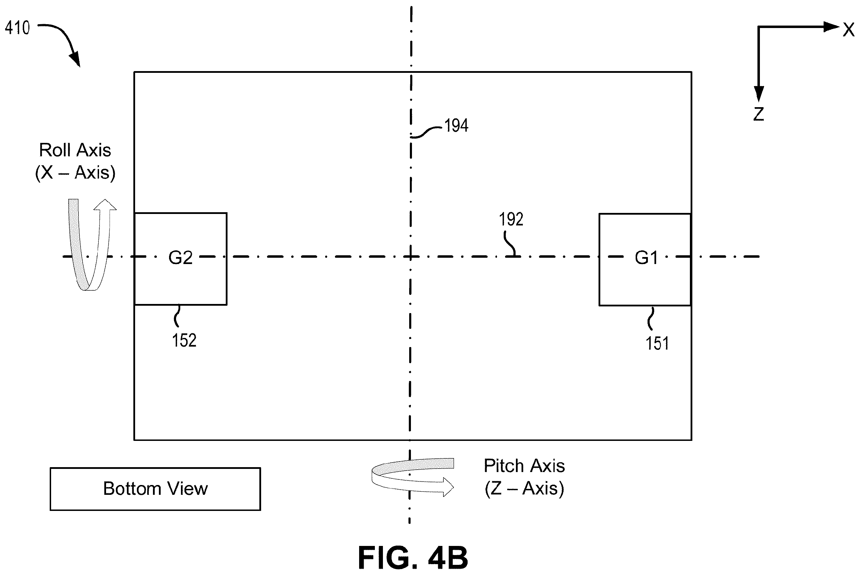

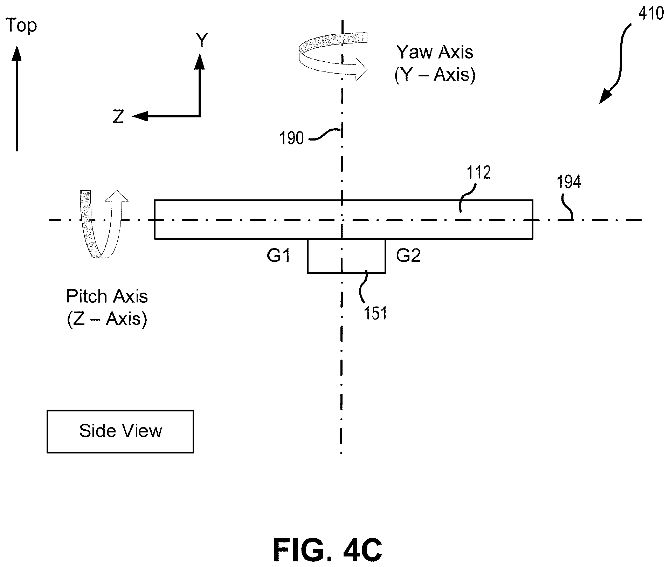

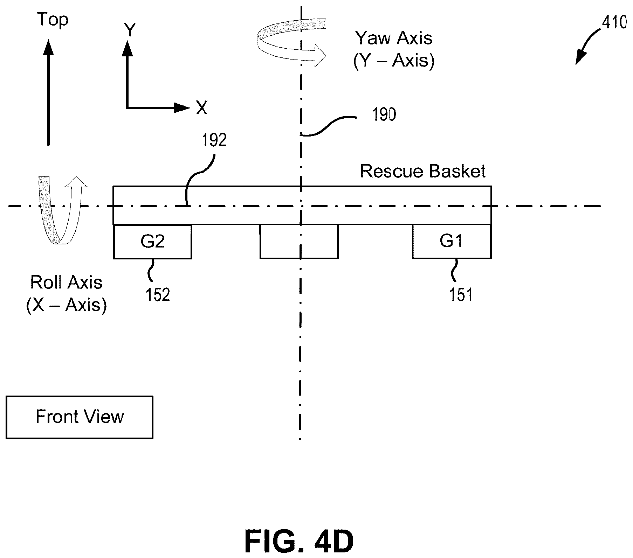

With reference to FIG. 4A through FIG. 4D, various schematic views of a patient litter basket assembly 410 including a patient litter basket 112 with a two gyroscope based configuration are illustrated, in accordance with various embodiments. In various embodiments, patient litter basket assembly 410 may be similar to patient litter basket assembly 110 of FIGs. 2A through FIG. 2D. With respect to FIGs. 4A through FIG. 4D, elements with like element numbering, as depicted in FIG. FIGs. 2A through FIG. 2D, are intended to be the same and will not necessarily be repeated for the sake of clarity. The control system of patient litter basket assembly 410 may apply corrective forces, being consistent with the below logic to ensure stability at every instant of a rescue operation.

**Table 2. Gyroscope control logic for yaw axis stabilization**

| **Gyroscope** | **Flywheel Rotation Axis, ω** | **Axis of Precession, ωₚ** | **Gyroscopic Torque Axis** | **Reaction Torque on Basket** |
|---|---|---|---|---|
| Gyroscope 1 | +X | +Z | -Y | -Z |
| Gyroscope 2 | -X | -Z | -Y | +Z |
| Net Torque/Moment | 0 | 0 | -2Y | 0 |

The objective of stabilizing the patient litter basket 112 may also be achieved with the use of two gyroscopes. The stability logic explained for the four gyroscope configuration is consistent for the two gyroscope configuration as well. A two gyroscope layout may ensure stabilization solution tailored for a rotor downwash scenario. Having two gyroscopes may help to reduce the overall weight of the system with respect to a four gyroscope configuration. A two gyroscope configuration may tend to be more suitable for mid to low risk applications.

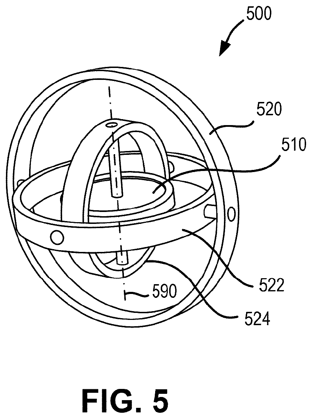

With reference to FIG. 5, an example gyroscope 500 is illustrated, in accordance with various embodiments. Gyroscopes 40 of FIG. 1, and/or gyroscopes 151, 152, 153, 154 of FIG. 2A may be similar to gyroscope 500. Gyroscope 500 includes a flywheel 510 rotatable about a flywheel rotation axis 590. In operation, flywheel 510 is powered (e.g., by a motor) to rotate about flywheel rotation axis 590 to impart a torque that is generally orthogonal to the flywheel rotation axis 590 and proportional to the inertia and the rotational speed of the spinning mass (i.e., flywheel 510). Flywheel 510 may be mounted rotatably mounted to a frame 520. In various embodiments, flywheel 510 is rotatably mounted to frame 520 via a first gimbal 522, whereby an orientation of flywheel 510 is variable to change the direction of torque output by gyroscope 500. In various embodiments, flywheel 510 is rotatably mounted to frame 520 via a second gimbal 524, whereby an orientation of flywheel 510 is further variable to change the direction of torque output by gyroscope 500. In various embodiments, flywheel 510 is rotatably mounted to second gimbal 524, which is rotatably mounted to first gimbal 522, which is in turn rotatably mounted to frame 520. In this manner, flywheel 510 may be rotatable in three dimensions. However, it is contemplated herein that a gyroscope of the present disclosure may have a flywheel rotatable about a fixed axis, in accordance with various embodiments. Furthermore, a gyroscope of the present disclosure may have a flywheel rotatable in only two dimensions. The variability of the flywheel may be based upon the axis about which stabilization is desired. For example, if stabilization is desired only about the yaw axis, a gyroscope having a flywheel configured to rotate about a single axis may be sufficient. However, if stabilization is desired about roll and pitch axes, a gyroscope having a flywheel configured to rotate about a three different axes may be provided. Moreover, multiple gyroscopes having a flywheel configured to rotate about a single axis, but each oriented in a different direction, may be provided to give multi-axis stabilization, in accordance with various embodiments.

In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments within the scope of the claims.

Benefits, other advantages, and solutions to problems have been described herein with regard to specific embodiments. Furthermore, the connecting lines shown in the various figures contained herein are intended to represent various functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

## Claims

1. A patient litter basket spin control assembly comprising:
a first gyroscope (40, 351), comprising a first flywheel (371), disposed, in use, at a first end of a patient litter basket (112);
a second gyroscope (352), comprising a second flywheel, disposed, in use, at a second end of a patient litter basket;
a motion sensor (306) ;
a controller (302) associated with the first gyroscope and configured to activate the first gyroscope by rotating the first flywheel about a first flywheel rotation axis and to activate the second gyroscope by rotating the second flywheel about a second flywheel rotation axis to generate a gyroscopic torque as a counter torque in a rotational direction to slow the angular acceleration of the patient litter basket, in use, in response to the motion sensor detecting an angular acceleration of the patient litter basket beyond a predetermined threshold angular accelerator; and
a power source (308) associated with the first gyroscope.

2. The patient litter basket spin control assembly of claim 1, further comprising a second gyroscope pair comprising a third gyroscope (353) and a fourth gyroscope (354), wherein the first gyroscope and the second gyroscope are configured to be disposed at opposite ends of the patient litter basket and the third gyroscope and the fourth gyroscope are configured to be disposed, in use, at opposite sides of the patient litter basket.

3. A patient litter basket assembly comprising:
a litter basket (112) configured to be raised and lowered by a helicopter using a cable; and a patient litter basket spin control assembly as claimed in any preceding claim.

4. The patient litter basket assembly of claim 3, wherein the
the first flywheel rotation axis is parallel to the second flywheel rotation axis.

5. The patient litter basket assembly of claim 3 or 4 when dependent on claim 2, wherein the third gyroscope comprises a third flywheel configured to rotate about a third flywheel rotation axis;
the fourth gyroscope comprises a fourth flywheel configured to rotate about a fourth flywheel rotation axis in a rotational direction opposite the third flywheel; and
the third flywheel rotation axis is parallel to the fourth flywheel rotation axis.

6. The patient litter basket assembly of any of claims 3 to 5, wherein at least one of the first gyroscope and the second gyroscope is mounted to a sidewall of the litter basket, or wherein at least one of the first gyroscope and the second gyroscope is disposed at least partially within a sidewall of the litter basket, or wherein at least one of the first gyroscope and the second gyroscope is mounted to a base of the litter basket.

7. A method for stabilizing a patient litter basket, the method comprising:
detecting an angular acceleration of the patient litter basket;
determining that the angular acceleration of the patient litter basket is greater than a predetermined threshold angular acceleration;
activating a first gyroscope, comprising a first flywheel, disposed at a first end of the patient litter basket; and
activating a second gyroscope, comprising a second flywheel, disposed at a second end of the patient litter basket, by rotating the first flywheel about a first flywheel rotation axis and the second flywheel about a second flywheel rotation axis to generate a gyroscopic torque to counter act a torque of the patient litter basket.

8. The method of claim 7, further comprising simultaneously activating the first gyroscope and a second gyroscope to counter act the torque of the patient litter basket, wherein the gyroscopic counter torque comprises a sum of a first torque generated by the first gyroscope and a second torque generated by the second gyroscope.

## Patentansprüche

1. Drehsteuerungsanordnung eines Patientenabfallbehälters, die Folgendes umfasst:
ein erstes Gyroskop (40, 351), das ein erstes Schwungrad (371) umfasst und im Gebrauch an einem ersten Ende eines Patientenabfallbehälters (112) angeordnet ist;
ein zweites Gyroskop (352), das ein zweites Schwungrad umfasst und im Gebrauch an einem zweiten Ende eines Patientenabfallbehälters angeordnet ist;
einen Bewegungssensor (306);
eine Steuerung (302), die dem ersten Gyroskop zugeordnet und so konfiguriert ist, dass sie das erste Gyroskop aktiviert, indem sie das erste Schwungrad um eine erste Schwungraddrehachse dreht, und dass sie das zweite Gyroskop aktiviert, indem sie das zweite Schwungrad um eine zweite Schwungraddrehachse dreht, um ein gyroskopisches Drehmoment als Gegendrehmoment in einer Drehrichtung zu erzeugen, um die Winkelbeschleunigung des Patientenabfallbehälters im Gebrauch zu verlangsamen, und zwar in Reaktion darauf, dass der Bewegungssensor eine Winkelbeschleunigung des Patientenabfallbehälters über einen vorbestimmten Schwellenwert für die Winkelbeschleunigung hinaus erfasst; und
eine Energiequelle (308), die dem ersten Gyroskop zugeordnet ist.

2. Drehsteuerungsanordnung eines Patientenabfallbehälters nach Anspruch 1, weiter umfassend ein zweites Gyroskoppaar, das ein drittes Gyroskop (353) und ein viertes Gyroskop (354) umfasst, wobei das erste Gyroskop und das zweite Gyroskop so konfiguriert sind, dass sie an gegenüberliegenden Enden des Patientenabfallbehälters angeordnet sind, und das dritte Gyroskop und das vierte Gyroskop so konfiguriert sind, dass sie im Gebrauch an gegenüberliegenden Seiten des Patientenabfallbehälters angeordnet sind.

3. Patientenabfallbehälteranordnung, die Folgendes umfasst:
einen Patientenabfallbehälter (112), die so konfiguriert ist, dass sie von einem Hubschrauber unter Verwendung eines Kabels angehoben und abgesenkt werden kann; und eine Drehsteuerungsanordnung des Patientenabfallbehälters nach einem der vorhergehenden Ansprüche.

4. Patientenabfallbehälteranordnung nach Anspruch 3, wobei
die Drehachse des ersten Schwungrads parallel zur Drehachse des zweiten Schwungrads verläuft.

5. Patientenabfallbehälteranordnung nach Anspruch 3 oder 4, wenn abhängig von Anspruch 2, wobei das dritte Gyroskop ein drittes Schwungrad umfasst, das so konfiguriert ist, dass es sich um eine dritte Schwungraddrehachse dreht;
das vierte Gyroskop ein viertes Schwungrad umfasst, das so konfiguriert ist, dass es sich um eine vierte Schwungraddrehachse in einer dem dritten Schwungrad entgegengesetzten Drehrichtung dreht; und
die Drehachse des dritten Schwungrads parallel zur Drehachse des vierten Schwungrads verläuft.

6. Patientenabfallbehälteranordnung nach einem der Ansprüche 3 bis 5, wobei mindestens eines von dem ersten Gyroskop und dem zweiten Gyroskop an einer Seitenwand des Patientenabfallbehälters angebracht ist, oder wobei mindestens eines von dem ersten Gyroskop und dem zweiten Gyroskop zumindest teilweise innerhalb einer Seitenwand des Patientenabfallbehälters angeordnet ist, oder wobei mindestens eines von dem ersten Gyroskop und dem zweiten Gyroskop an einem Boden des Patientenabfallbehälters angebracht ist.

7. Verfahren zum Stabilisieren eines Patientenabfallbehälters, wobei das Verfahren Folgendes umfasst:
Erfassen einer Winkelbeschleunigung des Patientenabfallbehälters;
Feststellen, dass die Winkelbeschleunigung des Patientenabfallbehälters größer ist als ein vorbestimmter Schwellenwert für die Winkelbeschleunigung;
Aktivieren eines ersten Gyroskops, das ein erstes Schwungrad umfasst und an einem ersten Ende des Patientenabfallbehälters angeordnet ist; und
Aktivieren eines zweiten Gyroskops, das ein zweites Schwungrad umfasst und an einem zweiten Ende des Patientenabfallbehälters angeordnet ist, durch Drehen des ersten Schwungrads um eine erste Schwungraddrehachse und des zweiten Schwungrads um eine zweite Schwungraddrehachse, um ein gyroskopisches Drehmoment zu erzeugen, das einem Drehmoment des Patientenabfallbehälters entgegenwirkt.

8. Verfahren nach Anspruch 7, weiter umfassend die gleichzeitige Aktivierung des ersten Gyroskops und eines zweiten Gyroskops, um dem Drehmoment des Patientenabfallbehälters entgegenzuwirken, wobei das gyroskopische Gegendrehmoment eine Summe aus einem ersten, durch das erste Gyroskop erzeugten Drehmoment und einem zweiten, durch das zweite Gyroskop erzeugten Drehmoment umfasst.

## Revendications

1. Ensemble de commande de rotation de panier de civière de patient comprenant :
un premier gyroscope (40, 351), comprenant un premier volant (371), disposé, en cours d'utilisation, au niveau d'une première extrémité d'un panier de civière de patient (112) ;
un deuxième gyroscope (352), comprenant un deuxième volant, disposé, en cours d'utilisation, au niveau d'une seconde extrémité d'un panier de civière de patient ;
un capteur de mouvement (306) ;
un dispositif de commande (302) associé au premier gyroscope et configuré pour activer le premier gyroscope en faisant tourner le premier volant autour d'un axe de rotation de premier volant et pour activer le deuxième gyroscope en faisant tourner le deuxième volant autour d'un axe de rotation de deuxième volant pour générer un couple gyroscopique en tant que contre-couple dans une direction de rotation pour ralentir l'accélération angulaire du panier de civière de patient, en cours d'utilisation, en réponse au fait que le capteur de mouvement détecte une accélération angulaire du panier de civière de patient au-delà d'un accélérateur angulaire de seuil prédéterminé ; et
une source d'alimentation (308) associée au premier gyroscope.

2. Ensemble de commande de rotation de panier de civière de patient selon la revendication 1, comprenant en outre une seconde paire de gyroscopes comprenant un troisième gyroscope (353) et un quatrième gyroscope (354), dans lequel le premier gyroscope et le deuxième gyroscope sont configurés pour être disposés au niveau d'extrémités opposées du panier de civière de patient et le troisième gyroscope et le quatrième gyroscope sont configurés pour être disposés, au cours d'une utilisation, au niveau d'extrémités opposées du panier de civière de patient.

3. Ensemble de panier de civière de patient comprenant :
un panier de civière (112) configuré pour être levé et abaissé par un hélicoptère en utilisant un câble ; et un ensemble de commande de rotation de panier de civière de patient selon une quelconque revendication précédente.

4. Ensemble de panier de civière de patient selon la revendication 3, dans lequel
l'axe de rotation de premier volant est parallèle à l'axe de rotation de deuxième volant.

5. Ensemble de panier de civière de patient selon la revendication 3 ou la revendication 4 lorsqu'elle dépend de la revendication 2, dans lequel le troisième gyroscope comprend un troisième volant configuré pour tourner autour d'un axe de rotation de troisième volant ;
le quatrième gyroscope comprend un quatrième volant configuré pour tourner autour d'un axe de rotation de quatrième volant dans une direction de rotation opposée au troisième volant ; et
l'axe de rotation de troisième volant est parallèle à l'axe de rotation de quatrième volant.

6. Ensemble de panier de civière de patient selon l'une quelconque des revendications 3 à 5, dans lequel au moins l'un du premier gyroscope et du deuxième gyroscope est monté sur une paroi latérale du panier de civière, ou dans lequel au moins l'un du premier gyroscope et du deuxième gyroscope est disposé au moins partiellement au sein d'une paroi latérale du panier de civière, ou dans lequel au moins l'un du premier gyroscope et du deuxième gyroscope est monté sur une base du panier de civière.

7. Procédé pour stabiliser un panier de civière de patient, le procédé comprenant :
une détection d'une accélération angulaire du panier de civière de patient ;
une détermination que l'accélération angulaire du panier de civière de patient est supérieure à une accélération angulaire de seuil prédéterminée ;
une activation d'un premier gyroscope, comprenant un premier volant, disposé au niveau d'une première extrémité du panier de civière de patient ; et
une activation d'un deuxième gyroscope, comprenant un deuxième volant, disposé au niveau d'une seconde extrémité du panier de civière de patient, en faisant tourner le premier volant autour d'un axe de rotation de premier volant et le deuxième volant autour d'un axe de rotation de deuxième volant pour générer un couple gyroscopique pour contrecarrer un couple du panier de civière de patient.

8. Procédé selon la revendication 7, comprenant en outre une activation simultanée du premier gyroscope et d'un deuxième gyroscope pour contrecarrer le couple du panier de civière de patient, dans lequel le contre-couple gyroscopique comprend une somme d'un premier couple généré par le premier gyroscope et d'un deuxième couple généré par le deuxième gyroscope.
